# EUROPÄISCHE PATENTSCHRIFT

(11) **EP 1 445 576 B1**
(45) Veröffentlichungstag und Bekanntmachung des Hinweises auf die Patenterteilung: **10.11.2010**
(21) Anmeldenummer: 04000934.2
(22) Anmeldetag: 17.01.2004
(51) Int. Cl.: G01B 11/10

(54) **Vorrichtung zum synchronen Messen des Durchmessers von stabförmigen Gegenstände der tabakverarbeitenden Industrie**
Method and device for measuring synchroneously the diameter of rodlike objects of the tobacco industry
Dispositif pour la mesure synchrone du diamètre d'objets en barre de l'industrie du tabac

(30) Priorität: 05.02.2003 DE 10304503
(43) Veröffentlichungstag der Anmeldung: 11.08.2004
(73) Patentinhaber: Hauni Maschinenbau Aktiengesellschaft, 21033 Hamburg (DE)
(72) Erfinder: Hapke, Siegfried, 21502 Geesthacht (DE); Sacher, Dirk, 21465 Wentorf (DE); Schröder, Dierk, Dr., 22399 Hamburg (DE); Straube, Peter, 21035 Hamburg (DE)
(74) Vertreter: Eisenführ, Speiser & Partner

(56) Entgegenhaltungen:
- DE-A- 2 729 576
- GB-A- 2 121 956
- GB-A- 2 124 762
- US-A- 4 139 890
- US-A- 5 930 734

## Beschreibung

Die Erfindung betrifft eine Vorrichtung zum gleichzeitigen Messen des Durchmessers von mindestens zwei Strängen der tabakverarbeitenden Industrie, mit mindestens zwei nebeneinander liegenden Messanordnungen, von denen jede Messanordnung zur Messung des Durchmessers eines Stranges vorgesehen ist und jeweils eine Bestrahlungseinrichtung zum Bestrahlen des Stranges und eine Erfassungseinrichtung zur Erfassung der Größe der vom Strang hervorgerufenen Abschattung und Erzeugung von den Durchmesser des Stranges angebenden Signalen aufweist, wobei der Strang im Strahlungsgang zwischen der Bestrahlurigseinrichtung und der Erfassungseinrichtung positionierbar oder durch den Strahlengang führbar ist. Der Begriff "Strang der tabakverarbeitenden Industrie" umfasst auch einen Endiosstrang, der in einem bestimmten Produktionsschritt als ganzes ode als bereits zerteiltes Strangstück zur Herstellung von Rauchartikein vorliegt, und zwar unabhängig davon, in welchem Produktionsschritt sich der Streng befindet. Unter Rauchartikel werden Zigaretten mit und ohne Falter, Filterstäbe, Zigarillos, Zigarren u. dgl. verstanden.

Insbesondere bei der Herstellung von Zigaretten und Filtern ist der Durchmesser ein wesentliches Qualitätsmerkmal, das bei der Herstellung zu überwachen ist. Dabei werden gewöhnlich die Stränge in Längsrichtung, also in Richtung ihrer Längsachse, kontinuierlich oder diskontinuierlich durch eine Messanordnung transportiert.

Die Schwierigkeiten genauer Messungen des Durchmessers liegen darin, dass die Stränge oft 'unrund' sind, also die Querschnitte senkrecht zu den Längsachsen mehr oder weniger von der Kreisform abweichen.

Aus der US 4 139 890 A ist ein System bekannt, mit dem ein in einem Stahlwerk hergestellter Rundstahl geplättet und optisch dargestellt werden soll. Hierbei findet eine optische Abbildung des Rundstahls mit Hilfe seines Schattens statt, dessen Breite proportional zum Durchmesser des Rundstahls ist.

Die DE 27 29 576 A offenbart eine Vorrichtung zur Umfangsmessung strangförmigen Gutes mit einer im Wesentlichen punktförmigen Strahlungsquelle und einer gegenüberliegenden Reihe von Fotodioden. Die Strahlenquelle und die Fotodioden sind an einem zylinderförmigen Gehäuse drehfest zueinander angeordnet, und das strangförmige Gut ist im Strahlungsgang zwischen der Strahlenquelle und den Fotodioden positionierbar oder durch den Strahlengang führbar. Ferner ist eine Einrichtung zur Rotation des Gehäuses vorgesehen, wodurch die Ausrichtung des Strahlenganges in Bezug auf das strangförmige Gut wahlweise verändert werden kann. Mit dieser bekannten Vorrichtung soll der Umfang des strangförmigen Gutes gemessen werden, bei welchem es sich konkret insbesondere um ein elektrisches Kabel handelt.

Die US 5 930 734 A und GB 2 121 956 A zeigen jeweils eine ähnliche optische Meßvorrichtung mit Verschwenkbarkeit des Strahlenganges in Bezug auf einen stationären Gegenstand.

Die GB 2 124 762 A offenbart ebenfalls eine optische Messvorrichtung, bei welcher allerdings die Bestrahlungseinrichtung und die Erfassungseinrichtung in ihrer Position unveränderlich sind.

Es ist Aufgabe der vorliegenden Erfindung, eine Vorrichtung der eingangs genannten Art anzugeben, welche mit hoher Messgenauigkeit eine zeitsparende Messung von Durchmessern von Strängen der tabakverarbeitenden Industrie erlaubt, ohne dass die Stränge um ihre Längsachse gedreht werden müssen.

Diese Aufgabe wird gelöst durch eine Vorrichtung zum gleichzeitigen Messen des Durchmessers von mindestens zwei Strängen der tabakverarbeitenden industrie, mit mindestens zwei nebeneinander liegenden Messanordnungen, von denen jede Messanordnung zur Messung des Durchmessers eines Stranges vorgesehen ist und jeweils eine Bestrahlungseinrichtung zum Bestrahlen des Stranges und eine Erfassungseinrichtung zur Erfassung der Größe der vom Strang hervorgerufenen Abschattung und Erzeugung von den Durchmesser des Stranges angebenden Signalen aufweist, wobei der Strang im Strahlungsgang zwischen der estrahlungseinrichtung und der Erfassungseinrichtung positionierbar oder durch den Strahlengang führbar ist, wobei jede Messanordnung eine Einrichtung zur wahlweisen Veränderung der Ausrichtung des Strahlenganges in bezug auf den Strang, aufweist und diese Einrichtungen der Messanordnungen zur wahlweisen Veränderung der Ausrichtung des Strahlenganges synchron zueinander arbeiten.

Demnach besteht die Erfindung darin, die Ausrichtung des Strahlenganges in bezug auf den jeweiligen Strang zu verändern, um eine Mehrzahl von Messungen des Durchmessers des Stranges vorzunehmen, wobei jede Messung aus einer anderen Perspektive erfolgt. Während der Veränderung der Ausrichtung des Strahlenganges wird der jeweilige Strang der Bestrahlung ausgesetzt und die hervorgerufene Abschattung der Strahlung gewöhnlich in schneller Folge kurzzeitig erfasst, wodurch eine Mehrzahl von Messsignalen erzeugt wird. Je größer die Anzahl der einzelnen Messungen über den Bereich, innerhalb dessen die Ausrichtung des Strahlenganges verändert wird, gewählt wird, um so genauer kann die Querschnittsform des jeweiligen Stranges ermittelt werden.

Die mit der Erfindung verbundenen Vorteile bestehen zum einen darin, dass der Durchmesser des jeweiligen Stranges sehr genau, insbesondere auch bei unrunden Strängen, ermittelt werden kann, und zum anderen darin, dass sich die erfindungsgemäße Messung auch für diejenigen Stränge, bei denen eine Drehung um deren Längsachse prozessbedingt nicht erforderlich oder gar nicht gewünscht ist, und insbesondere für Endlosstränge eignet.

Letzteres hat zur Folge, dass der jeweilige Strang während der Messung bewegungslos verhaken kann. Alternativ ist es aber auch denkbar und gerade für eine laufenden Prozess vorteilhaft, den jeweiligen Strang kontinuierlich oder diskontinuierlich in längsaxialer Richtung durch die Messanordnung zu bewegen, wobei während der Produktion in einem Produktionsschritt ein Endlosstrang vorliegen kann, der als ganzes oder als bereits zerteiltes Strangstück in längsaxialer Richtung durch die Messanordnung bewegt werden kann.

Dadurch dass die Erfindung eine nahezu unendliche Vielzahl von Messungen des Durchmessers an ein und derselben Stelle eines Stranges ermöglicht, lässt sich die Querschnittsform und die 'Unrundheit' sowie auch der minimale und der maximale Durchmesser eines Stranges ermitteln. Letzteres ist insbesondere wichtig, um festzustellen, ob sich der Durchmesser noch innerhalb erlaubter Grenzen bewegt. Ferner lässt sich die Erfindung insbesondere vorteilhaft zur Messung von im Querschnitt elliptischen Zigaretten und Filterstücken verwenden, um auf diese Weise jeweils zueinander passenden Filterstücke und Zigarettenstränge zu ermitteln.

Da der Durchmesser von mindestens zwei Strängen gleichzeitig gemessen wird, erfolgt erfindungsgemäß die Veränderung der Ausrichtung der Strahlengänge synchron zueinander.

Ferner kann mit Hilfe eines der Erfassungseinrichtung nachgeschalteten Mittelwertbitdners ein Mittelwert aus mehreren von der Erfassungseinrichtung erzeugten Signalen gebildet werden, von denen jedes Signal den Durchmesser des Stranges bei einer anderen Ausrichtung des Strahlenganges angibt. Somit kann aus einer Mehrzahl von Messsignalen der mittlere Durchmesser ermittelt werden. Je größer die Anzahl der einzelnen Messungen über den Bereich, innerhalb dessen die Ausrichtung des Strahlenganges verändert wird, gewählt wird, um so genauer kann der mittlere Durchmesserwert ermittelt werden.

Zweckmäßigerweise wird zur Veränderung der Ausrichtung des Strahlenganges die Lage zumindest eines Teils der Messanordnung in bezug auf den Strang verändert. In diesem Fall wird also die Relativanordnung von Bestrahlungseinrichtung und Erfassungseinrichtung gegenüber dem Strang verändert, wobei natürlich der Strahlengang so ausgerichtet sein muss, dass der Strang stets im Strahlengang liegt. Ferner ist es aber auch denkbar, nur Teile der Messanordnung in ihrer Position und/oder Ausrichtung in bezug auf den Strang zu verändern, um eine Änderung der Ausrichtung des Strahlenganges gegenüber dem Strang zu bewirken; hierzu können sich beispielsweise bewegbare Prismen-und/oder Spiegelanordnungen eignen.

Vorzugsweise werden die Strahlengänge synchron zueinander zu bewegt.

Gewöhnlich sollte der Strahlengang und insbesondere zumindest ein Teil der Messanordnung um einen im Strang liegenden Punkt bewegt werden. Denkbar ist beispielsweise eine Bewegung des Strahlenganges entlang einer gedachten Fläche, die die Form eines Doppelkegels besitzt, deren Spitzen sich an jenem Punkt treffen.

Bei einer Weiterbildung der zuvor erwähnten Ausführung sollte sich der Strahlengang und insbesondere zumindest ein Teil der Messanordnung in einer sich in einem Winkel zur Längsachse des Stranges erstreckenden Ebene bewegen.

Bevorzugt können die Strahlengänge gegenläufig zueinander bewegt werden. Zweckmäßigerweise sollten die hierzu verwendeten beiden Messanordnungen zwischen zwei Endstellungen verschwenkt werden, in denen sie jeweils im wesentlichen entgegengesetzt zueinander ausgerichtet sind. Sofern hierbei die beiden Messanordnungen jeweils einen längeren und einen kürzeren Abschnitt aufweisen, sollten sie mit ihrem längeren Abschnitt von der jeweils anderen weg verschwenkbar sein. Auf diese Weise lässt sich zum einen eine besonders platzsparende Anordnung realisieren und zum anderen die Gefahr einer Kollision zwischen den Messanordnungen während deren Bewegung vermeiden.

Zweckmäßigerweise sollte die Messanordnung gegenüber dem Strang so ausrichtbar sein, dass der Strahlengang im wesentlichen rechtwinklig zur Längsachse des Stranges verläuft. In einem solchen Fall sollte vorzugsweise die Drehachse zum Verschwenken des Strahlenganges und insbesondere zumindest eines Teils der Messanordnung im wesentlichen parallel zur Längsachse des Stranges verlaufen. Somit findet die Verschwenkung in der Querschnittsebene rechtwinklig zur Längsachse des Stranges statt. Durch Änderungen des Schwenkwinkels kann somit in unterschiedlichen Querschnittsachsen gemessen werden. Der Schwenkbereich umfasst idealerweise mindestens 180°. Somit können alle Querschnittsachsen erfasst und daraus ein mittlerer Durchmesserwert ermittelt werden. Da erfahrungsgemäß das Querschnittsprofil über einen längeren Strangabschnitt näherungsweise konstant ist, kann bei einem Schwenk insbesondere über etwa 180° der mittlere Durchmesser und die 'Unrundheit' sowie das Querschnittsprofil des Stranges mit hoher Genauigkeit ermittelt werden.

Nachfolgend wird ein bevorzugtes Ausführungsbeispiel der Erfindung näher erläutert. Es zeigen:
- Fig. 1: schematisch im Querschnitt eine doppelte Messanordnung zur Ermittlung der Durchmesser von zwei im wesentlichen zylindri- schen Strängen in einer zweibahnigen 'Endlos'-Strang- Produktionsvorrichtung;
- Fig. 2: der räumliche Verlauf eines typischen Messsignals; und
- Fig. 3: eine dreidimensionale Darstellung der Messanordnung gemäß Fig. 1 in einer bevorzugten Ausführung.

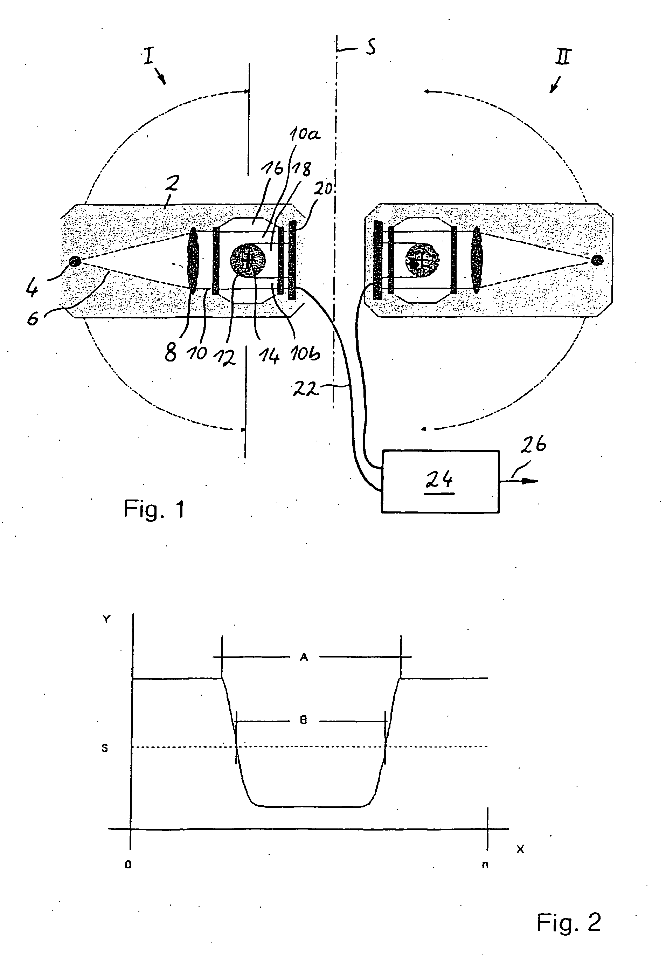

In Fig. 1 ist schematisch im Querschnitt eine doppelte Messanordnung für eine zweibahnige Endlosstrang-Produktionsvorrichtung dargestellt. Die doppelte Messanordnung weist zwei Messanordnungen I und II auf, von denen nachfolgend die Messanordnung I im Einzelnen beschrieben wird.

Jede Messanordnung weist ein Gehäuse 2 auf, innerhalb dessen eine Lichtschranke untergebracht ist. Die Lichtschranke weist eine Lichtquelle 4 auf, die beispielsweise aus einer Laserdiode oder Leuchtdiode besteht und einen hochkonzentrierten Lichtstrahl 6 im sichtbaren Bereich oder im Infrarotbereich abgibt. Aus diesem Lichtstrahl 6 wird in einer Kolimatorlinse 8 ein telezentrischer Lichtvorhang oder Lichtstrahl (paralleles Licht) 10 gebildet, der an einem zu vermessenden Strang 12 vorbeigeleitet wird.

Der Strang 12 kann während der Messung bewegungslos verharren oder kontinuierlich oder diskontinuierlich in längsaxialer Richtung durch die Messanordnung I bewegt werden. Auf jeden Fall ist der Strang 12 im dargestellten Ausführungsbeispiel so ausgerichtet, dass der Lichtstrahl 10 rechtwinklig zur Längsachse 14 des Stranges 12 gerichtet ist und somit entlang dessen Querschnittsebene verläuft.

Der Begriff" Strang", aus dem in der Tabak verarbeitenden Industrie Zigaretten mit und ohne Filter, Filterstäbe, Zigarillos und Zigarren sowie sonstige Rauchstäbe. hergestellt werden, umfasst auch einen Endlosstrang, der in einem bestimmten Produktionsschritt zunächst vorliegt und als ganzes oder als bereits zerteiltes Strangstück in längsaxialer Richtung durch die Messanordnung gemäß Fig. 1 bewegt werden kann. In Fig. 1 verläuft demnach die Transportrichtung des Stranges 12 in Richtung dessen Längsachse 14 rechtwinkelig zur Bildbetrachtungsebene. Für den Transport des Stranges 12 durch die Lichtschranke ist im Gehäuse 2 eine entsprechende Durchgangsöffnung 16 vorgesehen.

Der Strang 12 schattet einen Teil des telezentrischen Lichtstrahls 10 ab, so dass eine entsprechende Abschattung 18 entsteht, die von den übriggebliebenen seitlichen Abschnitten 10a und 10b des telezentrischen Lichtstrahls 10 eingerahmt wird, welche auf einen lichtempfindlichen Sensor 20 treffen. Der lichtempfindliche Sensor 20 besteht beispielsweise aus einem CCD-Zeilenarray und ist über ein Kabel 22 an eine Auswerteelektronik 24 angeschlossen, die aus den vom lichtempfindlichen Sensor 20 ermittelten Hell-Dunkel-Informationen den Durchmesser des Stranges 12 entsprechend der Abschattung 18 im Lichtvorhangsrichtung errechnet.

Im dargestellten Ausführungsbeispiel ist das Gehäuse 2 der Lichtschranke um eine Drehachse verschwenkbar gelagert, die mit der Längsachse 14 des Stranges 12 etwa zusammenfällt. Wie der Doppelpfeil A in Fig. 1 erkennen lässt, beträgt der Schwenkbereich im dargestellten Ausführungsbeispiel etwa +/- 90°

Wird nach einer Messung das Gehäuse 2 um einige Winkelgrade weiter gedreht und im Anschluss daran die nächste Messung vorgenommen, so kann der Durchmesser in einer weiteren Durchmesserachse des Stranges 12 ermittelt werden. Wird dieser Vorgang winkelgesteuert über einen Bereich von etwa +/-90° gemäß Doppelpfeil A von Fig. 1 (Gesamtbereich etwa 180°) durchgeführt, so kann ein Abbild des kompletten Querschnitts des Stranges 12 erfasst werden. Um möglicheBewegungsunschärfen zu eliminieren, sollte die Messung jeweils kurzzeitig erfolgen. Hierzu besteht eine Lösung darin, die Messanordnung mit gepulstem Licht von der Lichtquelle 4 und entsprechend synchronisiertem Sensor 20 aufzubauen. Eine weitere Möglichkeit könnte darin bestehen, den zu vermessenden Strang 12 mit einem stetigen Lichtstrahl 10 zu beaufschlagen und nur den Sensor 20 kurzzeitig zur Belichtung frei zu geben.

In Abhängigkeit von der Anzahl der Winkeländerungen des Gehäuses 2 der Lichtschranke wird in der Auswerteelektronik 24 eine entsprechende Anzahl von errechnet. Diese Durchmesserwerte werden anschließend in der Auswerteelektronik 24 gemittelt, so dass das von der Auswerteelektronik 24 erzeugte Ausgangssignal 26 den mittleren Durchmesser sowie ggf. zusätzlich den Querschnittsprofil und die 'Unrundheit' des Stranges 12 mit hoher Genauigkeit angibt.

Da, wie bereite zuvor erwähnt, Fig. 1 eine doppelte Messanordnung für eine zweibahnige Endlosstrang-Produktionsvorrichtung zeigt, ist die zweite Messanordnung II im dargestellten Ausführungsbeispiel um eine Symmetrieachse S entsprechend gespiegelt in gleicher Weise wie die Messanordnung I aufgebaut. Deshalb wird hinsichtlich der Konstruktion der Messanordnung II auf die zuvor gegebene Beschreibung der Messanordnung I verwiesen.

Fig. 2 zeigt ein typisches Messsignal des lichtempfindlichen Sensors 20 von Fig. 1. Die Y-Achselzeigt die Intensität des auftreffenden Lichtes, während die X-Achse die Position (0 .. n) auf einem Zeilenarray des lichtempfindlichen Sensors 20 (Fig. 1) darstellt. Im Bereich der durch den Strang 12 erzeugten Abschattung 18 (Fig. 1) fällt Intensität stark ab. Um die Unschärfe in den Randbereichen zu eliminieren, wird über eine in der Auswertelektronik 24 (Fig. 1) einzustellende Schaltschwelle S ein gültiger Schattenbereich B definiert, aus dem in der Auswerteelektronik 24 (Fig. 1) der Durchmesser in der gewählten Durchmesserachse errechnet wird.

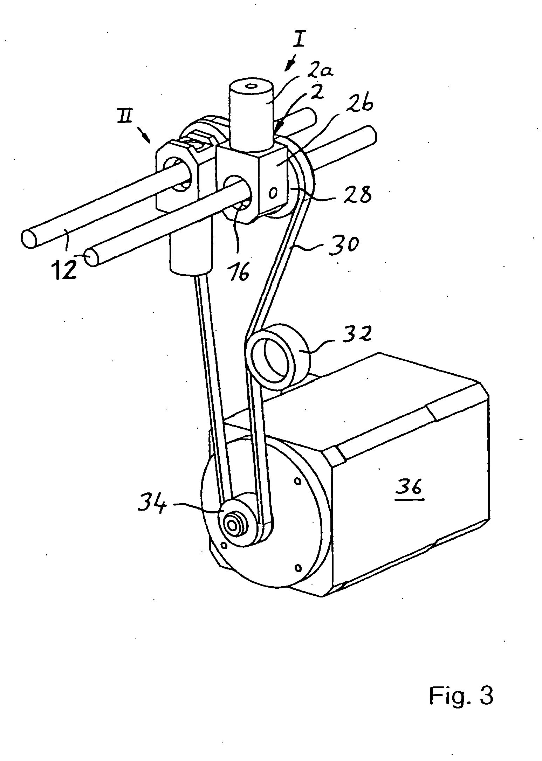

Fig. 3 zeigt eine dreidimensionale Darstellung einer bevorzugten Ausführung der doppelten Messanordnung von Fig. 1. Die Gehäuse 2 beider Messanordnungen I und II bestehen - wie in Fig. 3 an der ersten Messanordnung I anhand von Bezugszeichen kenntlich gemacht ist -, aus einem ersten Abschnitt 2a, in dem die Lichtquelle 4 (Fig. 1) untergebracht ist, und einem zweiten Abschnitt 2b, in dem der lichtempfindliche Sensor 20 (Fig. 1) angeordnet ist. Ferner lässt Fig. 3 die Durchgangsöffnung 16 erkennen, die im zweiten Abschnitt 2b des Gehäuses 2 ausgebildet ist und durch die der Strang 12, hier als Endlosstrang dargestellt, geführt wird. Im dargestellten Ausführungsbeispiel findet während des Transportes des Stranges 12 eine Drehung um dessen Längsachse nicht statt.

An jedem Gehäuse 2 ist drehfest eine Riemenscheibe 28 befestigt. Über die Riemenscheiben 28 der beiden Gehäuse 2 läuft ein gemeinsamer endloser Riemen 30. Dieser Riemen 30 ist ferner an einer Spannrolle 32 entlang geführt und läuft über eine Antriebsrolle 34, die von einem elektronisch gesteuerten Antrieb 36 angetrieben wird. Der elektronische Antrieb, der beispielsweise aus einem elektronisch gesteuerten Servo-Motor bestehen kann, ist in der Lage, eine zeitlineare Schwenkbewegung über 180° zu erzeugen. Die Schwenkbewegung kann synchron oder asynchron zu den durchlaufenden Strängen 12 und/oder dem Maschinentakt der in den Figuren nicht dargestellten Produktionsvorrichtung gesteuert werden. Der Maschinentakt sowie der Takt des elektronischen Antriebes 36 können dazu benutzt werden, die Einzelmessungen synchron zur Schwenkbewegung und/oder zur Produktionsgeschwindigkeit vorzunehmen.

Wie Fig. 3 ferner erkennen lässt, sind die beiden Messanordnungen I und II in der dargestellte einen Endstellung um 180° versetzt, also in entgegengesetzter Richtung angeordnet. Eine solche Anordnung hat den Vorteil, dass beide Messanordnungen I und II in geringem Abstand voneinander positioniert und dabei in gleicher Richtung um 180° jeweils nach außen, d.h. jeweils voneinander weg verschwenkt werden können, ohne dass diese miteinander kollidieren. Somit bildet die in Fig. 3 dargestellte Ausführung einen besonders kompakten Messaufbau und ermöglicht den Einbau der doppelten Messanordnung insbesondere auch bei räumlich schwierigen Platzverhältnissen. Ferner sind die beiden Messanordnungen I und bei der in Fig. 3 gezeigten Ausführung in Strangrichtung zueinander versetzt angeordnet. Insbesondere hat die in Fig. 3 gezeigte Ausführung den Vorteil, dass bei einer zweibahnigen Endlosstrang-Produktion beide Stränge 12 parallel vermessen werden können, da die Schwenkbewegung der beiden Messanordnungen I und II zeitgleich durch den elektronischen Antrieb 36 bewirkt wird.

Die in den Figuren 1 und 3 gezeigte Doppel-Messanordnung kommt vorzugsweise in einer Zwei-Strang-Zigarettenmaschine zum Einsatz.

## Patentansprüche

1. Vorrichtung zum gleichzeitigen Messen des Durchmessers von mindestens zwei Sprangen (12) der tabakverarbeitenden Industrie, mit mindestens zwei nebeneinander liegenden Messanordnungen (I, II), von denen jede Messanordnung zur Messung des Durchmessers eines Stranges (12) vorgesehen ist und jeweils eine Bestrahlungseinrichtung (4) zum Bestrahlen des Stranges (12) und eine Erfassungseinrichtung (20) zur Erfassung der Größe der vom Strang (12) hervorgerufenen Abschattung (18) und Erzeugung von den Durchmesser des Stranges (12) angebenden Signalen aufweist, wobei der Strang (12) im Strahlungsgang (10) zwischen der Bestrahlungseinrichtung (4) und der Erfassungseinrichtung (20) positionierbar oder durch den Strahlengang (10) führbar ist,
wobei jede Messanordnung (I, II) eine Einrichtung (28, 30, 34, 36) zur wahlweisen Veränderung der Ausrichtung des Strahlenganges (10) in bezug auf den Strang (12), aufweist und diese Einrichtungen der Messanordnungen (I, II) zur wahlweisen Veränderung der Ausrichtung des Strahlenganges (10) synchron zueinander arbeiten.

2. Vorrichtung nach Anspruch 1,
**gekennzeichnet durch** einen der Erfassungseinrichtung (20) nachgeschalteten Mittelwertbildner zur Bildung eines Mittelwertes (26) aus mehreren von der Erfassungseinrichtungl (20) erzeugten Signalen, von denen jedes Signal den Durchmesser des Stranges (12) bei einer anderen Ausrichtung des Strahlenganges (10) angibt.

3. Vorrichtung nach Anspruch 1 oder 2,
**dadurch gekennzeichnet, dass** die Einrichtung zur wahlweisen Veränderung der Ausrichtung des Strahlenganges (10) eine Einrichtung zur Veränderung der Lage zumindest eines Teils der Messanordnung (4, 20) in bezug auf den Strang (12) aufweist.

4. Vorrichtung nach Anspruch 1,
**dadurch gekennzeichnet, dass** die Einrichtung zur wahlweisen Veränderung der Ausrichtung des Strahlenganges eine Einrichtung zur Bewegung der Strahlenganges (10) um einen im Strang (12) liegenden Punkt (14) ist.

5. Vorrichtung nach Anspruch 4,
**dadurch gekennzeichnet, dass** die Einrichtungen der Meßanordnungen (I, II) zur Bewegung des Strahlenganges die Strahlengänge (10) synchron zueinander bewegen.

6. Vorrichtung nach Anspruch 4,
**dadurch gekennzeichnet, dass** die Einrichtung zur Bewegung des Strahlenganges (10) eine Einrichtung zum Bewegen zumindest eines Teils der Messanordnung um einen im Strang (12) liegenden Punkt (14) aufweist.

7. Vorrichtung nach Anspruch 4,
**dadurch gekennzeichnet, dass** die Einrichtung zur wahlweisen Veränderung der Ausrichtung des Strahlenganges (10) eine Einrichtung zum Verschwenken des Strahlenganges (10) entlang einer sich in einem Winkel zur Längsachse (14) des Stranges (12) erstreckenden Ebene ist.

8. Vorrichtung nach Anspruch 7,
**dadurch gekennzeichnet, dass** die Einrichtung zum Verschwenken des Strahlenganges (10) ein Einrichtung zum Verschwenken mindestens eines Teils der Messanordnung entlang einer sich in einem Winkel zur Längsachse (14) des Stranges (12) erstreckenden Ebene aufweist.

9. Vorrichtung nach Anspruch 7, **dadurch gekennzeichnet, dass** die Einrichtung zum Verschwenken des Strahlenganges (10) eine Schwenkbewegung um etwa 180° erzeugt.

10. Vorrichtung nach Anspruch 4,
**dadurch gekennzeichnet, dass** die Einrichtungen zur Bewegung des Strahlenganges eine gegenläufige Bewegung der Strahlengänge (10) zueinander erzeugen.

11. Vorrichtung nach Anspruch 10, **dadurch gekennzeichnet, dass** die beiden Meßanordnungen (I, II) zwischen zwei Endstellungen verschwenkbar sind, in denen sie jeweils entgegengesetzt zueinander ausgerichtet sind.

12. Vorrichtung nach Anspruch 11, **dadurch gekennzeichnet, dass** die beiden Meßanordnungen (I, II) jeweils einen längeren Abschnitt (2a) und einen kürzeren Abschnitt aufweisen und mit ihrem längeren Abschnitt (2a) von der jeweils anderen Messanordnung weg verschwenkbar sind.

13. Vorrichtung nach Anspruch 1,
**dadurch gekennzeichnet, dass** die Messanordnung gegenüber dem Strang (12) so ausrichtbar ist, dass der Strahlengang (10) rechtwinklig zur Längsachse (14) des Stranges (12) verläuft.

14. Vorrichtung nach Anspruch 7,
**dadurch gekennzeichnet, dass** die Drehachse der Einrichtung zum Verschwenken des Strahlenganges (10) parallel zur Längsachse (14) des Stranges (12) verläuft oder mit dieser zusammenfällt.

## Claims

1. Device for the simultaneous measurement of the diameter of at least two strands (12) in the tobacco-processing industry, with at least two measuring arrangements (I, II) lying next to one another, each measuring arrangement of which is intended for the measurement of the diameter of a strand (12) and in each case an irradiation device (4) for irradiating the strand (12) and a detection device (20) for detecting the extent of the shadowing (18) created by the strand (12) and generation of signals representing the diameter of the strand (12), wherein the strand (12) can be positioned in the optical path (10) between the irradiation device (4) and the detection device (20) or can be fed through the optical path (10),
wherein each measuring arrangement (I, II) has a device (28, 30, 34, 36) for the optional change of orientation of the optical path (10) with regard to the strand (12) and these devices of the measuring arrangements (I, II) work synchronously to one another for the optional change of orientation of the optical path (10).

2. Device according to claim 1,
**characterised by** an averager connected downstream from the detection device (20) for forming a mean value (26) from several signals generated by the detection device (20), each signal of which represents the diameter of the strand (12) at a different orientation of the optical path (10).

3. Device according to claim 1 or 2,
**characterised in that** the device for the optional change of orientation of the optical path (10) has a device for changing the position of at least one part of the measuring arrangement (4, 20) with regard to the strand (12).

4. Device according to claim 1,
**characterised in that** the device for the optional change of orientation of the optical path is a device for moving the optical path (10) around a point (14) lying in the stand (12).

5. Device according to claim 4,
**characterised in that** the devices of the measuring arrangements (I, II) move the optical paths (10) synchronously to one another to move the optical path.

6. Device according to claim 4,
**characterised in that** the device for moving the optical path (10) has a device for moving at least part of the measuring arrangement around a point (14) lying in the strand (12).

7. Device according to claim 4,
**characterised in that** the device for optionally changing the orientation of the optical path (10) is a device for pivoting the optical path (10) along a plane extending at an angle to the longitudinal axis (14) of the strand (12).

8. Device according to claim 7,
**characterised in that** the device for pivoting the optical path (10) has a device for pivoting at least part of the measuring arrangement along a plane extending at an angle to the longitudinal axis (14) of the strand (12).

9. Device according to claim 7, **characterised in that** the device for pivoting the optical path (10) creates a swivelling movement around approximately 180°.

10. Device according to claim 4,
**characterised in that** the devices for moving the optical path create a movement of the optical paths (10) in the opposite direction to one another.

11. Device according to claim 10, **characterised in that** the two measuring arrangements (I, II) can be pivoted between two end positions in which they are in each case oriented opposite one another.

12. Device according to claim 11, **characterised in that** the two measuring arrangements (I, II) in each case have a longer section (2a) and a shorter section and can be pivoted with their longer section (2a) away from the in each case other measuring arrangement.

13. Device according to claim 1,
**characterised in that** the measuring arrangement can be oriented with regard to the strand (12) so that the optical path (10) runs at right angles to the longitudinal axis (14) of the strand (12).

14. Device according to claim 7,
**characterised in that** the axis of rotation of the device for pivoting the optical path (10) runs parallel to the longitudinal axis (14) of the strand (12) or coincides with this.

## Revendications

1. Dispositif pour la mesure simultanée du diamètre d'au moins deux boudins (12) de l'industrie de transformation du tabac, comprenant au moins deux systèmes de mesure (I, II) juxtaposés, chaque système de mesure étant prévu pour mesurer le diamètre d'un boudin (12) et présentant respectivement un dispositif à rayonnement (4) pour irradier le boudin (12) et un dispositif de détection (20) pour détecter la dimension de l'ombre (18) générée par le boudin (12) et générer des signaux indiquant le diamètre du boudin (12), le boudin (12) pouvant être positionné dans la trajectoire des rayons (10) entre le dispositif à rayonnement (4) et le dispositif de détection (20) ou pouvant être guidé à travers la trajectoire des rayons (10), dans lequel chaque système de mesure (I, II) présente un dispositif (28, 30, 34, 36) pour faire varier sélectivement l'orientation de la trajectoire des rayons (10) par rapport au boudin (12) et ces dispositifs des systèmes de mesure (I, II) destinés à faire varier sélectivement l'orientation de la trajectoire des rayons (10) opèrent de manière synchrone entre eux.

2. Dispositif selon la revendication 1,
**caractérisé par** un moyenneur, monté en aval du dispositif de détection (20), destiné à former une valeur moyenne (26) à partir de plusieurs signaux générés par le dispositif de détection (20), dont chaque signal indique le diamètre du boudin (12) pour une orientation différente de la trajectoire des rayons (10).

3. Dispositif selon la revendication 1 ou 2,
**caractérisé en ce que** le dispositif pour faire varier sélectivement l'orientation de la trajectoire des rayons (10) présente un dispositif permettant de faire varier la position d'au moins une partie du système de mesure (4, 20) par rapport au boudin (12).

4. Dispositif selon la revendication 1,
**caractérisé en ce que** le dispositif pour faire varier sélectivement l'orientation de la trajectoire des rayons est un dispositif destiné à déplacer la trajectoire des rayons (10) autour d'un point (14) situé dans le boudin (12).

5. Dispositif selon la revendication 4,
**caractérisé en ce que** les dispositifs des systèmes de mesure (I, II), pour le déplacement de la trajectoire des rayons, déplacent les trajectoires des rayons (10) de manière synchrone entre elles.

6. Dispositif selon la revendication 4,
**caractérisé en ce que** le dispositif destiné à déplacer la trajectoire des rayons (10) présente un dispositif destiné à déplacer au moins une partie du système de mesure autour d'un point (14) situé dans le boudin (12).

7. Dispositif selon la revendication 4,
**caractérisé en ce que** le dispositif pour faire varier sélectivement l'orientation de la trajectoire des rayons (10) est un dispositif destiné à faire pivoter la trajectoire des rayons (10) le long d'un plan s'étendant en formant un angle par rapport à l'axe longitudinal (14) du boudin (12).

8. Dispositif selon la revendication 7,
**caractérisé en ce que** le dispositif destiné à faire pivoter la trajectoire des rayons (10) présente un dispositif destiné à faire pivoter au moins une partie du système de mesure le long d'un plan s'étendant en formant un angle par rapport à l'axe longitudinal (14) du boudin (12).

9. Dispositif selon la revendication 7,
**caractérisé en ce que** le dispositif destiné à faire pivoter la trajectoire des rayons (10) génère un mouvement de pivotement d'environ 180°.

10. Dispositif selon la revendication 4,
**caractérisé en ce que** les dispositifs pour déplacer la trajectoire des rayons produisent un mouvement des trajectoires des rayons (10) en sens inverse l'une de l'autre.

11. Dispositif selon la revendication 10,
**caractérisé en ce que** les deux systèmes de mesure (I, II) sont aptes à pivoter entre deux positions d'extrémité dans lesquelles ils sont respectivement orientés en sens opposé l'un par rapport à l'autre.

12. Dispositif selon la revendication 11,
**caractérisé en ce que** les deux systèmes de mesure (I, II) présentent respectivement un segment (2a) plus long et un segment plus court, et peuvent chacun pivoter avec leur segment plus long en s'écartant respectivement de l'autre système de mesure.

13. Dispositif selon la revendication 1,
**caractérisé en ce que** le système de mesure peut être orienté par rapport au boudin (12) de telle sorte que la trajectoire des rayons (10) soit à angle droit par rapport à l'axe longitudinal (14) du boudin (12).

14. Dispositif selon la revendication 7,
**caractérisé en ce que** l'axe de rotation du dispositif de pivotement de la trajectoire des rayons (10) est parallèle à l'axe longitudinal (14) du boudin (12) ou coïncide avec celui-ci.
